# EUROPEAN PATENT SPECIFICATION

(11) **EP 0 696 615 B1**
(45) Date of publication and mention of the grant of the patent: **10.11.1999**
(21) Application number: 95112603.6
(22) Date of filing: 10.08.1995
(51) Int. Cl.: C08K 7/14, C08K 7/02, C08G 69/36

(54) **Polyamide resin composition and biaxially stretched film**
Polyamid Harzzusammensetzung und biaxial gedehnte Folie
Composition de résine polyamide et film biaxiallement étiré

(30) Priority: 12.08.1994 JP 19063194
(43) Date of publication of application: 14.02.1996
(73) Proprietor: MITSUBISHI ENGINEERING-PLASTICS CORPORATION, Tokyo 104 (JP)
(72) Inventor: Urabe, Hiroshi, c/o Mitsubishi, 370 Enzo, Chigasaki-shi, Kanagawa-ken (JP); Sugiura, Katsuhiko, c/o Mitsubishi, 370 Enzo, Chigasaki-shi, Kanagawa-ken (JP); Tsunoda, Morio, c/o Mitsubishi, 370 Enzo, Chigasaki-shi, Kanagawa-ken (JP); Kanemasa, Tomoaki, c/o Mitsubishi, 370 Enzo, Chigasaki-shi, Kanagawa-ken (JP)
(74) Representative: Hansen, Bernd, Dr. Dipl.-Chem.

(56) References cited:
- EP-A- 0 034 757
- EP-A- 0 509 282
- EP-A- 0 592 996
- DE-A- 1 645 537
- DATABASE WPI Section Ch, Week 8704, Derwent Publications Ltd., London, GB; Class A23, AN 87-026304 & JP-A-61 283 621 (SUMITOMO CHEM IND KK) 13 December 1986
- DATABASE WPI Section Ch, Week 9305, Derwent Publications Ltd., London, GB; Class A23, AN 93-042595 & JP-A-4 370 116 (TORAY IND INC) 22 December 1992
- DATABASE WPI Section Ch, Week 8850, Derwent Publications Ltd., London, GB; Class A23, AN 88-357692 & JP-A-63 268 744 (MITSUBISHI CHEM IND KK) 7 November 1988
- DATABASE WPI Section Ch, Week 8202, Derwent Publications Ltd., London, GB; Class A23, AN 82-03062E & JP-A-56 151 729 (TORAY IND INC) 24 November 1981

## Description

### BACKGROUND OF THE INVENTION

The present invention relates to a polyamide resin composition suited for producing biaxially stretched films, especially food-packaging films which have little likelihood of suffering whitening in hot-water treatments and a matte surface appearance.

Since polyamide resin films have excellent gas barrier property, mechanical and thermal properties, the polyamide resin films are practically used for many applications, principally for food packaging, as monolayer films, multilayer films with other resin(s) or laminate films with other material(s). Biaxially stretched polyamide resin films are especially noted for high toughness and heat resistance.

These polyamide resin films are usually smooth and glossy on the surface, but in some applications, there are required the films having a matte or dull surface appearance. Specifically, for certain purposes of application, film are required which have an appearance and touch similar to those of mat paper (or mat paper coated with PVDC or the like).

Various methods have been tried for modifying the surface state of the said films for such applications. For example, it has been proposed to blend particles of an inorganic filler such as talc, silica, calcium carbonate or the like in the film so as to roughen the film surface, or to blend a small quantity of other resin such as polyethylene so as to make the film surface opaque. It has been also suggested to fabricate the film by a roll roughened on the surface by embossing processing or other means to impart an unevenness on the film surface.

However, in the blending method of inorganic filler, there are problems that the filler which can be blended is limited to the one with a small particle size for avoiding break of the film during biaxially stretching, and also the amount of filler that can be added is restricted. In this case, therefore, it is impossible to obtain a film with a well satisfactory mat surface appearance, and the film strength is also lowered. The blending method of other resin(s), although is capable of lowering transparency to impart a slight matting effect, is still unsatisfactory for the intended purpose and rather invite a lowering of film strength.

The surface roughening method by fabricating, although is relatively easy for non-stretched films, possesses problems that when the surface-roughened film is stretched, its surface may become smooth again to bring about gloss. The surface roughening may be performed after the film has been stretched, but a film which has been toughened by orientation can not be roughened on the surface unless a high pressure is applied at high temperature, so that in this case there arise problems of giving damage to the film surface so as to lower its strength during surface roughening processing or causing shrinkage of the stretched film. The fabricating is also economically unfavorable as the additional expense is required.

Thus commercial production of a biaxially stretched film having a satisfactory mat surface appearance has been impossible with the prior art.

Also, in the case of using of polyamide resin film for packaging of food such as sausage or ham, there are problems that the film is subject to "whitening" when heated as in boiling, after stuffed with food. Such whitening is a detrimental factor for film appearance. It has thus been required for a food packaging film to have more excellent gas barrier property and be resistant to whitening during heating, but there has not yet been available a polyamide resin composition capable of providing a food packaging film which can meet all of these requirements.

In view of the above problems of conventional polyamide resin films, as a result of the present inventors' earnest studies for developing a polyamide resin composition that can provide a tough biaxially stretched film which scarcely suffers whitening when heated and has a matte surface appearance, it has been found that by using a resin composition having a specific heat of fusion of crystal, and blending glass fiber of a specific size and shape in a polyamide resin of a specific composition, the obtained biaxially stretched polyamide resin film has an excellent gas barrier property and high mechanical and thermal properties, is resistant to whitening during heating, and has a matte surface appearance. The present invention has been achieved on the basis of the above finding.

### SUMMARY OF THE INVENTION

In an aspect of the present invention, there is provided a polyamide resin composition for film, comprising a polyamide resin and a fibrous material blended therein, characterized in that the polyamide resin is a blend composed of a copolymer polyamide and two or more polyamides, in which in the whole polyamides, the content of the polyamide forming units comprising caprolactam is 10 to 90 mol%, the content of the polyamide forming units composed of adipic acid and hexamethylenediamine is 0,5 to 30 mol%, the content of the polyamide foming units composed of therephthalic acid and hexamethylenediamine is 0,5 to 50 mol%, and the content of the polyamide forming units composed of isophthalic acid and hexamethylenediamine is 0,5 to 30 mol%.

### DETAILED DESCRIPTION OF THE INVENTION

The polyamide resin composition of the present invention is specified by the fact that the heat of fusion of crystal of the said composition measured as a whole composition by a differential scanning calorimeter (DSC) after a heat-treatment at 95°C for 60 minutes is not more than 55 mJ/mg, preferably not more than 52 mJ/mg.

When the heat of fusion of crystal is more than the above-defined range, the film of the said composition, when used as a food packaging film, is liable to become whitened on the surface when heated as in boiling, and badly impaired in appearance. Also, the produced film is unsatisfactory in gas barrier property, lacks flexibility, and is rough and coarse to the touch.

The heat-treatment at 95°C for 60 minutes was applied for determining the heat of fusion of crystal of the composition which has been crystallized to the maximal degree. In view of water absorptivity of the polyamide resin, it is advisable to apply a hydrothermal treatment at 95°C for 60 minutes.

The boiling resin composition of the present invention for meeting the above requirements for the heat of fusion of crystal comprises fibrous materials and polyamide resin.

The polyamide resins usable in the present invention include polyamide resins obtained from polycondesation of three- or more membered ring lactams; or polymerizable ω-amino acids or dibasic acids and diamines. Typical examples of these materials are lactams such as ε-caprolactam, aminocaproic acid, enantholactam, 7-aminoheptanoic acid, 11-aminoundecanoic acid, 9-aminononanoic acid, α-pyrrolidone, α-piperidone, etc.; and polycondensable salts (monomers) composed of diamines such as hexamethylenediamine, nonamethylenediamine, undecamethylenediamine, dodecamethylenediamine, metaxylenediamine, etc., and dicarboxylic acids such as terephthalic acid, isophthalic acid, adipic acid, sebacic acid, azelaic acid, dodecanoic debasic acid, glutaric acid, dimer acid, etc. As the polyamide resins usable in the present invention, nylons 6/6, 6/9, 6/10, 6/12, 6/6·6, 6/6·9, 6/6·10, 6/6·12, 6/6·36, 6/6I, 6/6T and 6I/6T may be exemplified.

In the present invention, by selecting such composition of polyamide resin, that is, by selecting the comonomer composition of polyamide resins and the blending ratio of the copolymerized polyamide resins, it is possible to obtain the polyamide resin composition having the heat of fusion of crystal in the specified range in the present invention. Copolymerized polyamide resins using two or three kinds of the said polycondensable monomers, in particular copolymer components regulated so that the specific aliphatic polyamide moiety and aromatic polyamide moiety are contained in a specified amount range, are blended in a specified ratio so as to provide a polyamide resin composition whose the heat of fusion of crystal lies in the defined range in the present invention.

Specifically, the polyamide resin materials containing 10 to 90 mol%, preferably 50 to 90 mol%, more preferably 65 to 87 mol% of polyamide forming units comprising ε-caprolactam (nylon 6 units) are preferred. When the content of the nylon 6 units exceeds 90 mol% based on the whole polyamide resin, the film surface may be whitened during heat-treatment such as boiling. When the content of the nylon 6 units is less than 50 mol%, the film-strength improving effect by stretching treatment is lowered, making it meaningless to stretch the film.

The content of the nylon 6 units was calculated by multiplying molar fraction of copolymerization and blending weight fraction of ε-caprolactam of each resin used and totaling the products for all of the resins used. The same method was used for calculating the contents of other structural units.

As copolymer components other than ε-caprolactam, there can be used other lactams, diamines and dicarboxylic acids in proper combinations such that the molar ratio of the nylon 6 units to the whole polyamide resin falls in the above-defined range.

In case where the film is used for food packaging, a gas barrier property of the film is regarded as important. In this case, a monomer having aromatic rings is preferably selected as copolymer component. For instance, isophthalic acid or terephthalic acid is used as dicarboxylic component and xylenediamine is used as diamine component.

The combined use of an aromatic dicarboxylic acid and an aromatic diamine for copolymerization is not preferable since such a combination forms an aramid which is difficult to conduct the melt extrusion and makes it unable to obtain a practical copolymer polyamide.

The copolymerization formulations and blending ratios of the polyamide resins are adjusted such that the obtained composition contains 0.5 to 30 mol%, preferably 1 to 15 mol%, more preferably 1 to 10 mol% of polyamide forming units (nylon 66 units) composed of ε-captrolactam such as mentioned above, adipic acid and hexamethylenediamine, 0.5 to 50 mol%, preferably 1 to 30 mol%, more preferably 2 to 20 mol% of polyamide forming units (nylon 6T units) composed of terephthalic acid and hexamethylenediamine, and 0.5 to 30 mol%, preferably 1 to 15 mol%, more preferably 1 to 10 mol% of polyamide forming units (nylon 6I units) composed of isophthalic acid and hexamethylenediamine. By incorporating these particularities, it is possible to obtain a resin composition whose the heat of fusion of crystal falls within the specified range of the present invention. Also, when this resin composition is processed into a biaxially stretched film, its mechanical properties, especially tensile strength and sticking strength are greatly improved.

When the content of the nylon 66 units is less than 0.5 mol%, the produced film is poor in flexibility, and when the content thereof exceeds 30 mol%, the whitening preventive effect during heating is lowered. When the content of the nylon 6T units is less than 0.5 mol% or the content of the nylon 6I units is less than 0.5 mol%, the whitening preventive effect is low, the stable stretchability is poor and the gas barrier property is deteriorated. On the other hand, when the content of the nylon 6T units exceeds 50 mol% or the content of the nylon 6I units exceeds 30 mol%, the strength of the film is not increased even when stretched, and also the gloss elevates to impair the matting effect.

For obtaining a polyamide resin containing the specific polyamide forming components in the specified ratios, there can be used, for instance, a polyamide resin blend composed a specific aliphatic polyamide resin and a half-aromatic polyamide resin.

A preferred example of the said aliphatic polyamide resin is nylon 6/66 copolymer resin composed of caprolactam, hexamethylenediamine and adipic acid, more preferably nylon 6/66 copolymer resin containing 5 to 20% by weight of the nylon 66 units.

It is also recommended to jointly use nylon 6/6T copolymer resin composed of caprolactam, hexamethylenediamine and terephthalic acid, more preferably use nylon 6/6T copolymer resin containing 1 to 30% by weight of the nylon 6T units.

The half-aromatic polyamide resin used for the said polyamide resin blend is, for instance, the one obtained by polymerizing or copolymerizing 100 to 60% by weight of polyamide forming units composed of aliphatic diamine, isophthalic acid and terephthalic acid, and 0 to 40% by weight of polyamide forming units composed of (1) lactams, (2) aliphatic diamines and aliphatic dicarboxylic acids, and (3) lactams, aliphatic diamines and aliphatic dicarboxylic acids.

Examples of aliphatic diamines copolymerizable with aromatic dicarboxylic acids are linear aliphatic diamines such as ethylenediamine, tetramethylenediamine, hexamethylenediamine, octamethylenediamine, decamethylenediamine, etc., and derivatives thereof such as methylated, ethylated or halogenated compounds of the said diamines. The aliphatic diamines may include aliphatic diamines having cylohexane ring such as bis(3-methyl-4- aminocyclohexyl)methane.

The copolymerazable lactoms and lactams usable in the polyamide forming units composed of lactams, aliphatic diamines and aliphatic dicarboxylic acids include caprolactam, lauryllactam, butyrolactam, capryllactam, enantholactam, undecanolactam, dodecanolactam and the like. Aliphatic diamines usable in the said polyamide forming units include linear aliphatic diamines such as ethylenediamine, tetramethylenediamine, hexamethylenediamine, octamethylenediamine, decamethylenediamine and the like, and aliphatic dicarboxylic acids usable in the said polyamide forming units include succinic acid, glutamic acid, adipic acid, pimelic acid, suberic acid, azelaic acid, sebacic acid and their derivatives such as their methylated, ethylated or halogenated compounds. Caprolactam unit (nylon 6 unit) or polyamide forming unit (nylon 66 unit) composed of adipic acid and hexamethylenediamine is especially preferred.

Isophthalic acid and terephthalic acid principally used as aromatic dicarboxylic acids may be used in any optional ratio, but they are preferably used in an isophthalic acid/terephthalic acid ratio of 80/20 to 20/80, more preferably 80/50 to 50/50, still more preferably 80/20 to 60/40 (by weight).

Typical examples of such half-aromatic polyamide resin are polyamide resin obtained from terephthalic acid, isophthalic acid and hexamethylenediamine, and copolymerized polyamide resins containing the said polyamide resin as a copolymer unit. Especially preferred is polyamide resin obtained by polymerizing, blending or copolymerizing 100 to 60% by weight of polyamide forming units composed of aliphatic diamine, isophthalic acid and terephthalic acid, and 0 to 40% by weight of polyamide forming units composed of (1) lactams, (2) aliphatic diamines and aliphatic dicarboxylic acids and (3) lactams, aliphatic diamines and aliphatic dicarboxylic acids.

In the present invention, it is especially preferred to use a mixture of nylon 6/66 copolymer resin, nylon 6/6T copolymer resin and half-aromatic polyamide resin. As for the mixing ratios of these resins, the amount of nylon 6/66 copolymer resin is 1 to 30% by weight, preferably 5 to 20% by weight, the amount of nylon 6/6T copolymer is 15 to 95% by weight, preferably 20 to 80% by weight, more preferably 50 to 80% by weight, and the amount of half-aromatic polyamide resin (nylon 6I/6T copolymer resin) is 1 to 30% by weight, preferably 1 to 15% by weight.

When the mixing ratio of the nylon 6/66 copolymer resin is too low, the produced film becomes rigid, and when its content is too high, the whitening preventive effect during heating is deteriorated.

If the mixing ratio of the nylon 6/6T copolymer resin is too low, the whitening preventive effect during heating is deteriorated and the gas barrier property of the film is lowered. If the mixing ratio of the nylon 6/6T copolymer resin is too large, the film produced becomes rigid and does not put in practical use.

When the mixing ratio of half-aromatic polyamide resin is too low, the whitening preventive effect during heating is deteriorated, and when the mixing ratio is too large, the strength of the produced film is lowered and the flexibility of the produced film is poor.

The mixing ratio of the nylon 6/66 copolymer resin to nylon 6/6T copolymer resin is preferably in the range of 1 : 3 to 1 : 8.5, more preferably 1 : 4 to 1 : 6. The amount of half-aromatic polyamide resin used in the present invention is 0.3 to 30 times, preferably 0.5 to 10 times, more preferably 0.5 to 5 times the amount of nylon 6/66 copolymer resin.

Relative viscosity (ηᵣₑₗ) of the whole polyamide resin, measured according to JIS-K-6810 in 98% sulfuric acid at 1% concentration and 25°C, is in the range of 2 to 6, preferably 2 to 5. When relative viscosity is too low, the produced film is unsatisfactory in mechanical properties, and when the relative viscosity is too large, the film forming properties are deteriorated.

Regarding the polyamide resin of the present invention, it is preferable that its water extraction percentage for determining the content of low-molecular weight material, as measured according to MEP Method (After immersing a pellet of 10 g into boiling water for 6 hours, the pellet was taken out, water in which the pellet had been immersed was dried up, and the measurement of weight of the obtained residuals was carried out. The weight ratio of the residuals per the weight of the pellet is referred as 'water extraction percentage'), is not more than 1% by weight, more preferably not more than 0.5% by weight. When the water extraction percentage is more than 1% by weight, the low-molecular weight materials such as monomers and dimer is apt to adhere to and around the lip of the die, and become more likely to contact or adhere to the film, thereby causing defective appearance of the film such as formation of fish eyes.

In the present invention, fibrous material is blended principally for the purpose of improving the matting effect or hand feeling of the film. The fibrous material used in the present invention is preferably selected such that in the state of being contained in the stretched film, the fibrous material has a diameter (D) of 3 to 15 µm, an average length (L) of 15 to 150 µm, preferably 20 to 100 µm, and an L/D ratio of 2 to 15, preferably 2 to 10. If the fibrous material used are too long, the fibrous material is liable to break when stretched, and if the fibrous material are too short, the matting effect is unsatisfactory.

The fibrous material used in the present invention is not specified and there can be used any suitable material, for instance, glass fiber, carbon fiber, aramid fiber, potassium titanate fiber, fibrous silicate and other fibrous materials. In view of affinity for polyamide resin and uniform dispersibility, glass fiber is more preferred.

The above requirements for fibrous material to be used in the present invention are those applied to the fibrous material in the state of being contained in the stretched film, so that no specific restrictions are imposed on glass fiber to be blended, and it is possible to use glass fiber commonly employed for reinforcement of thermoplastic resins. Thus, the length of glass fiber blended is not restricted to the above defined range and there can be used long glass fiber such as chopped strand or roving, which is mechanically crushed to pieces of a desired length during mixing or in the film forming process. However, since fibers with a length exceeding 500 µm need to be substantially removed because otherwise the produced film is liable to break when stretched, it is more preferable to blend from the beginning a short glass fiber called milled fiber (D: 3 to 15, L: 3 to 15, and L/D: 2 to 15).

For avoiding break of the film when stretched, it is preferable to enhance adhesive force between glass fiber and polyamide resin, and for this purpose, it is recommended to perform surface-treatment of glass fiber with a silane coupling agent. The kind of silane coupling agent used here is not specified, but the one having amino groups or epoxy groups is particularly effective.

In the present invention, the fibrous material is blended in a ratio of 0.5 to 10 parts by weight, preferably 1 to 8 parts by weight based on 100 parts by weight of polyamide resin. When the blending ratio of the fibrous material is too large, there may be the risk of the film being broken when stretched, and when the blending ratio is too low, the intended effect may not be obtained. It is to be noted that since the heat of fusion of crystal is also affected by the blending ratio of glass fiber, it is adjusted so that heat of fusion of crystal of the obtained polyamide resin composition falls in the range specified in the present invention.

Preparation process of the polyamide resin composition of the present invention is not restricted and the composition can be prepared according to an ordinarily method. For example, polyamide resin pellets may be dry-blended with glass fiber in a specified ratio, or such blend may be melted and mixed by an extruder. Also, a masterbatch may be prepared by incorporating the glass fiber in polyamide resin to a high concentration and then diluted when molded into a film.

The polyamide resin composition of the present invention may contain various kinds of additives known in the art, for example, inorganic fillers such as silica, talc, kaolin, calcium carbonate, zeolite, wollastonite, etc.; antioxidants such as hindered phenol, phosphoric ester, phosphorous ester, etc.; weather resistance improvers such as benzotriazole compounds; colorants such as pigment and dye; antistatic agent; lubricant; etc.

The thus prepared resin composition can be molded into a film by a known film forming method such as casting method, inflation method, etc. Preferably a continuous melt extrusion method is used.

Stretching may be either uniaxial or biaxial, but biaxial stretching is preferred. The biaxial stretching may be conducted by either tubular method or roll and tenter method. Any suitable stretching method known in the art may be employed. The stretching ratio is 2 to 4 times, preferably 2 to 3.5 times in both machine and transverse directions.

The polyamide film of the present invention may be a monolayer film or a multilayer film formed by coextrusion or lamination.

Thickness of the biaxially stretched film of the present invention is, in the case of the monolayer film, 3 to 50 µm, preferably 10 to 30 µm. In the case of multilayer film, thickness of the layer composed of the polyamide resin composition of the present invention is 1 to 50 µm, preferably 2 to 40 µm.

The biaxially stretched film of the present invention obtained in the manner described above is matted on the surface, with surface gloss being preferably not more than 65%, more preferably not more than 62%. Also, the film has a moderate degree of strength and flexibility, and its sticking strength measured by using a sticking needle having an end radius of 0.5 mm is preferably not less than 300 g, more preferably 500 to 2,000 g.

The film has a rough feeling close to paper, and its 10-point average surface roughness (Rt) measured by a attached-type surface roughness tester is preferably not less than 10 µm.

As described above, the biaxially stretched film composed of the polyamide resin composition of the present invention is matted on the surface, has an appearance and feeling close to paper, is resistant to whitening when heated as in boiling, and has excellent gas barrier property, flexibility and mechanical strength, so that this film is particularly suited for packaging of such foods as ham and sausage.

Especially, the oxygen-permeability of the biaxially stretched film of the present invention is preferably not less than 50 cc/m²·day·25 µm, and its tensile strength is preferably not less than 800 kg/cm².

### EXAMPLES

The present invention will be more concretely explained by way of the following examples.

Various properties of the film shown in the following Examples were determined by the methods described below.

### (1) Heat of fusion of crystal

Sample of biaxially stretched film was cut to a square test piece of 100 mm x 100 mm, immersed in 95°C hot water for 60 minutes, cooled to room temperature and then heated at a rate of 20°C/min, determining the heat of fusion of crystal by a differential scanning calorimeter (DSC).

### (2) Surface gloss

Measured according to JIS-Z-8741 using a glossmeter Model L-TC-108D (manufactured by Tokyo Denshoku Co., Ltd) at an incidence angle of 60°.

### (3) 10-point average roughness (Rt)

Measured according to JIS-B-0651 using a surface roughness tester Model SE-3FK (manufactured by Kosaka Kenkyusho, Ltd.).

### (4) Stretchability

Evaluated according to the following criterion by stretching film under the conditions described later.
- ○:: Stretching success percentage is more than 95%.
- Δ:: Stretching success percentage is 30 to 95%.
- ×:: Stretching success percentage is less than 30%.

### (5) Evaluation of whitening preventive effect

Sample was cut to 100 mm x 100 mm, immersed in 95°C hot water for 60 minutes, then cooled to room temperature and evaluated according to the following criterion.

Good: No whitening was observed by visual observation.

Bad: Whitening was observed by visual observation.

### (6) Gas barrier property

Oxygen barrier property (oxygen permeability in unit of 'cc/m²·day·25 µm') were determined under the conditions of 23°C and 65% RH using OX-TRAN TWIN (manufactured by Modern Controls Inc.).

### (7) Mechanical strength (tensile strength)

Measured according to ASTM-D-882 in unit of 'kg/cm²'.

### (8) Average length of glass fiber

Sample was burned in a 600°C electric furnace to obtain glass fiber alone, and this glass fiber was developed into slide glass. Only the fibers having a length of not less than 10 µm were chosen and the length of 200 pieces of such fibers was measured under a microscope to determine the average length.

### (9) Sticking strength

Sample of 10 mmφ was pierced with a sticking needle with an end radius of 0.5 mm at sticking rate of 300 mm/min and the stress was measured using REO METER NRM-200ZJ (manufactured by Fudo Kogyo Co., Ltd)

### Examples 1-3 and Comparative Examples 1-2

14.0 parts by weight of commercial 6/66 copolymer resin (80 wt% of the nylon 6 units and 20 wt% of nylon 66 units) having a relative viscosity of 4.5, 70.2 parts by weight of commercial nylon 6/6T copolymer resin (90 wt% of the nylon 6 units and 10 wt% of nylon 6T units) having a relative viscosity of 3.5, 9.8 parts by weight of half-aromatic polyamide resin (copolymer polyamide of hexamethylenediamine, isophthalic acid and terephthalic acid; isophthalic acid/terephthalic acid (weight ratio) = 2.5/1), and the different types of commercial glass fiber shown in Table 1 at the ratios also shown in Table 1, were blended and the blends were melted, kneaded and extruded at resin temperature of 260°C by a 35 mmφ vented twin-screw extruder to obtain pellets.

As for the nylon components in the polyamide resin, nylon 6/66 copolymer resin and nylon 6/6T copolymer resin were synthesized according to the method described in Japanese Patent Application Laid-open (Kokai) No. 60-219227, and half-aromatic polyamide resin was synthesized according to the method described in Japanese Patent Application Laid-open (Kokai) No. 62-127346. Content of the nylon 6 segment was 77 mol% in the whole.

The pellets were dried in vacuo at 120°C for 10 hours and worked into a 180 µm-thick film by a T-die type film forming machine with extruder diameter of 40 mmφ at resin temperature of 250°C.

The produced films were heated to 80°C and biaxially stretched 3 times in each direction simultaneously at different stretching rates to obtain the biaxially stretched films. The stretched films were heat-set in a 180°C oven for one minute.

Various properties of the thus obtained films were determined. The results are shown in Table 1. Also, each film was burned in a 600°C electric furnace to collect glass fiber alone, and this was developed to slide glass. Only the fibers having a length of not less than 10 µm were chosen and the length of 200 of such fibers was determined under a microscope to determine the average length.

### Examples 4-6 and Comparative Examples 3-7

The same procedure and evaluation as in Example 1 were carried out changing the composition of the polyamide resin.

In Comparative Example 6, test was conducted using nylon 6 alone, and in Comparative Example 7, test was performed with a whole aromatic polyamide obtained by a known method (Japanese Patent Publication (Kokoku) Nos. 35-13246, 35-14399, etc.).

Specifically, in Comparative Example 7, methaphenylenediamine, isophthalic acid chloride and terephthalic acid chloride were dissolved in N,N-dimethylacetamide and polymerized by low-temperature solution polymerization method. Further, the polymerization solvent was evaporated away in vacuo to obtain powder of a whole-aromatic polyamide. Its relative viscosity as measured in 98% H₂SO₄ was 1.8. This polymer was subjected to the same test as in Example 1. The results are shown in Table 2 along with those of Example 2.

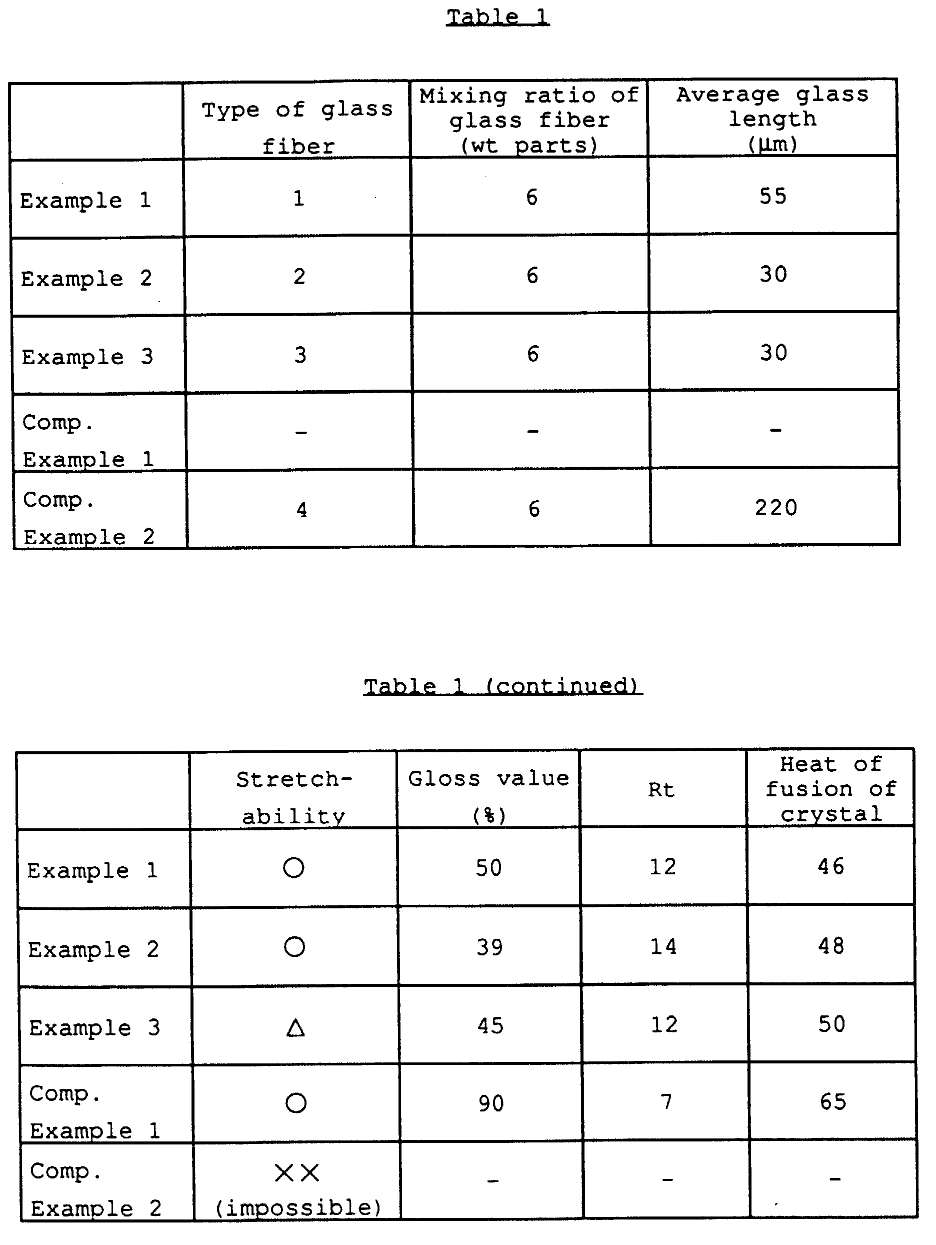

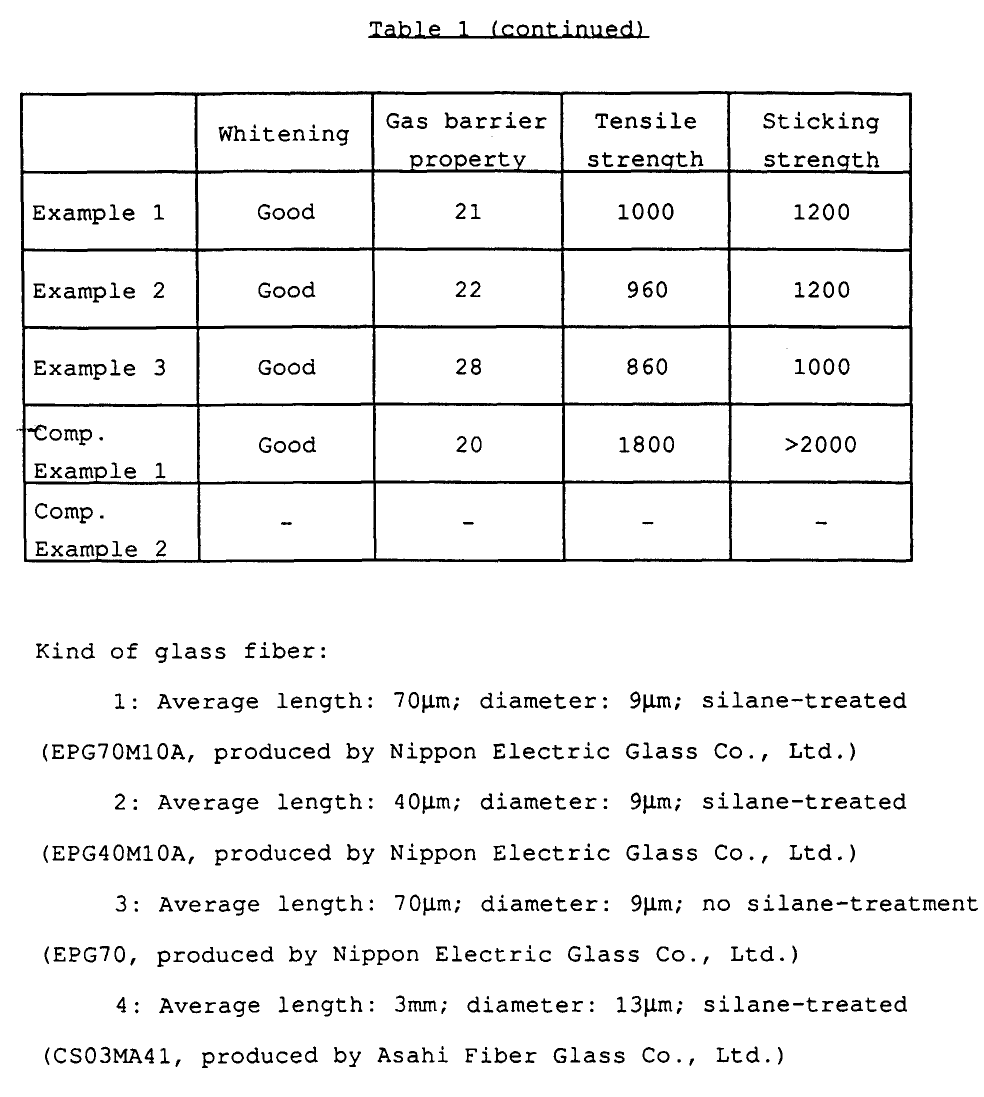

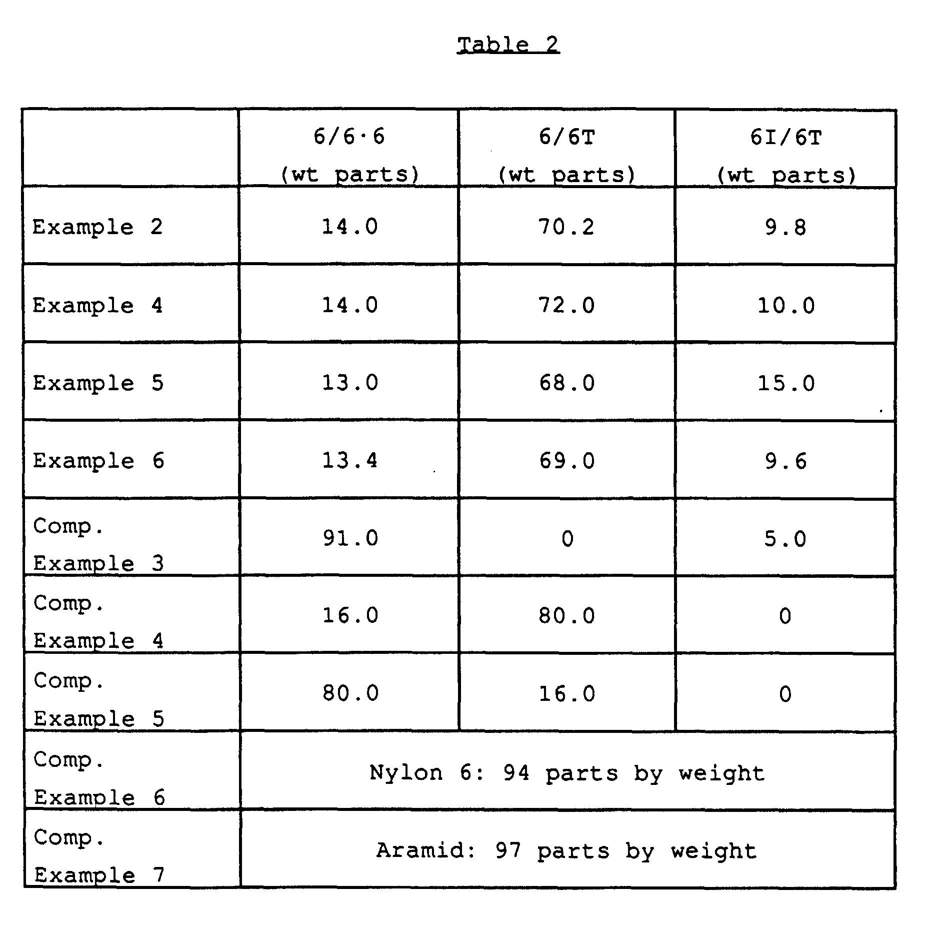

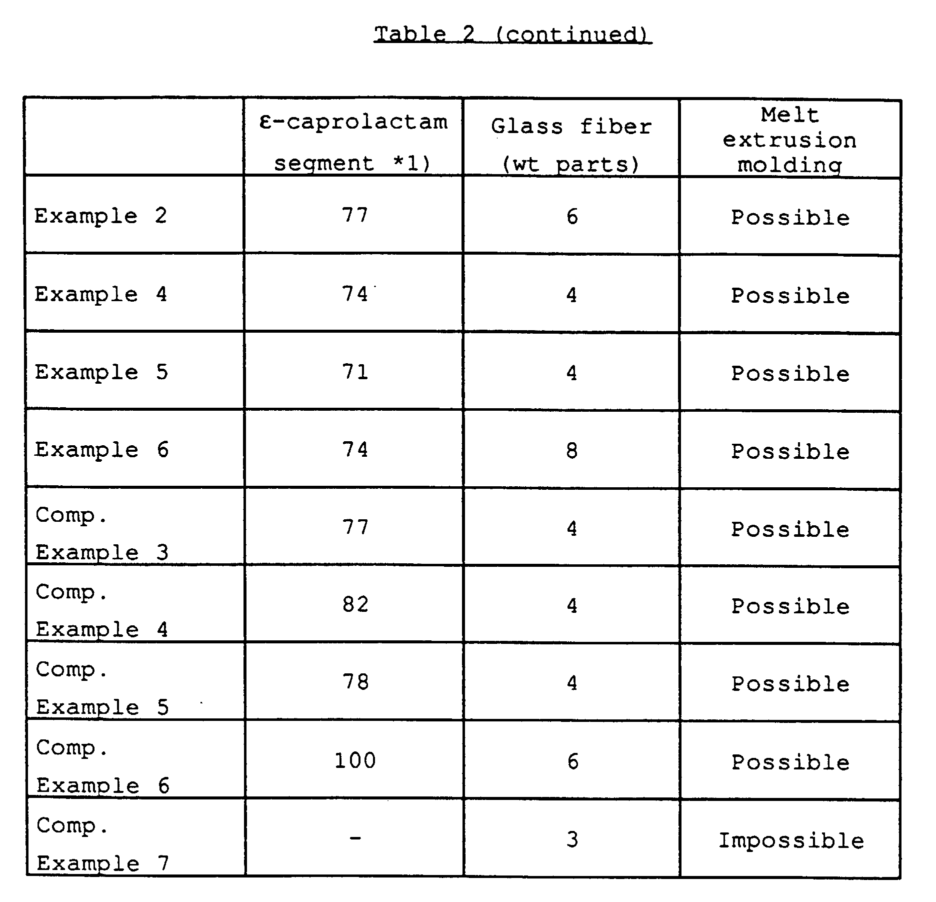

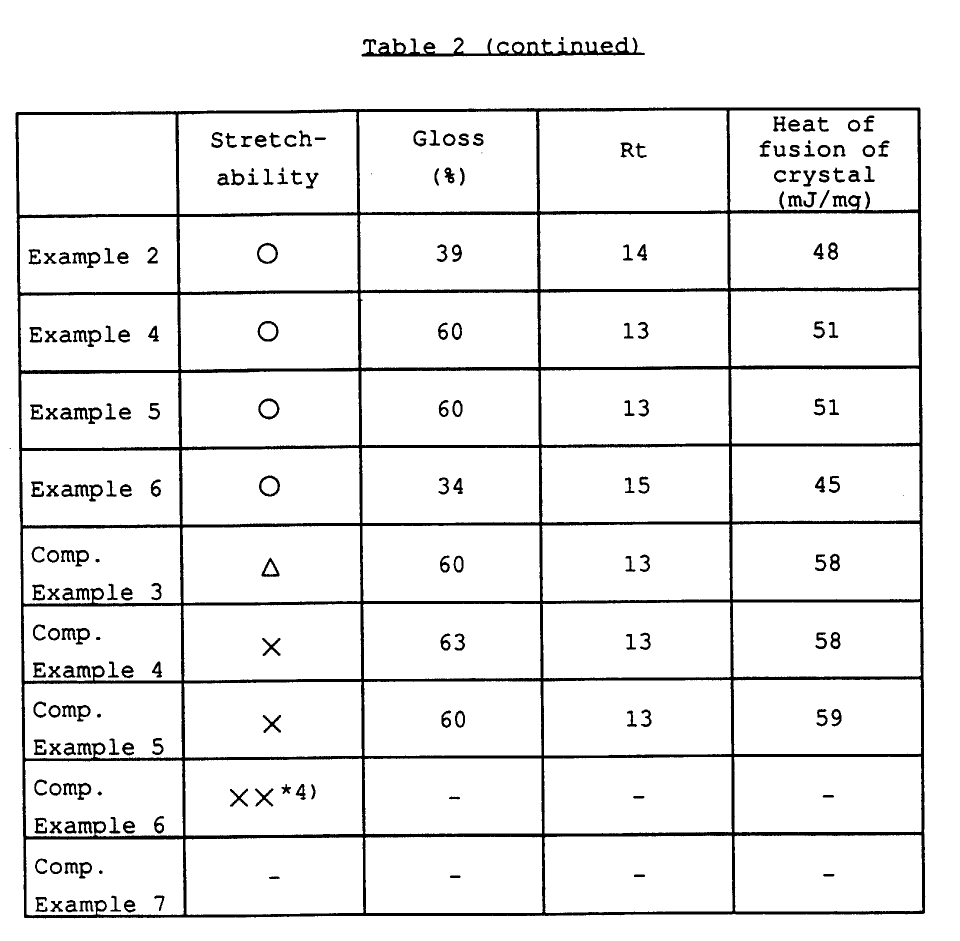

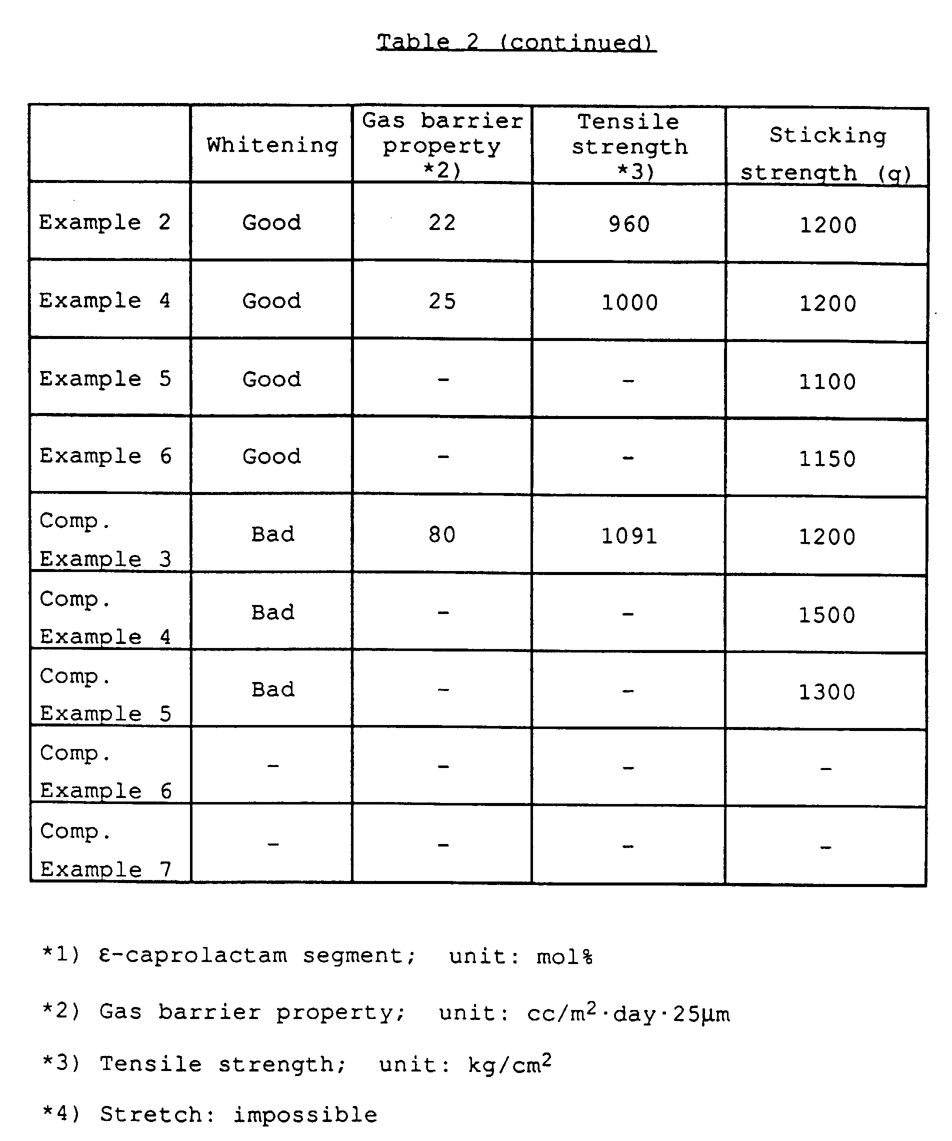

## Claims

1. A polyamide resin composition for film, comprising a polyamide resin and a fibrous material blended therein, characterized in that the polyamide resin is a blend composed of a copolymer polyamide and two or more polyamides, in which in the whole polyamides, the content of the polyamide forming units comprising caprolactam is 10 to 90 mol%, the content of the polyamide forming units composed of adipic acid and hexamethylenediamine is 0,5 to 30 mol%, the content of the polyamide forming units composed of therephthalic acid and hexamethylenediamine is 0,5 to 50 mol%, and the content of the polyamide forming units composed of isophthalic acid and hexamethylenediamine is 0,5 to 30 mol%.

2. A polyamide resin composition according to claim 1, wherein the polyamide resin is a blend composed of a copolymer of ε-caprolactam, hexamethylenediamine and adipic acid, a copolymer of ε-caprolactam, hexamethylenediamine and terephthalic acid, and a copolymer of hexamethylenediamine, isophthalic acid and terephthalic acid.

3. A polyamide resin composition according to any of claims 1 and 2, wherein the fibrous material is a glass fiber.

4. A polyamide resin composition according to claim 3, wherein the diameter (D) of the glass fiber is 3 to 15 µm, the average length (L) of the glass fiber is 15 to 100 µm, and the ratio (L/D) of the average length to the diameter of the glass fiber is 2 to 15.

5. A polyamide resin composition according to any of claims 1 to 4, wherein the fibrous material is blended in an amount of 2 to 10 % by weight.

6. A polyamide resin composition according to any of claims 1 to 5, wherein the content of the polyamide forming units comprising caprolactam is 65 to 87 mol%.

7. A biaxially stretched film comprising a polyamide resin composition set forth in any of claims 1 to 6.

8. A biaxially stretched film according to claim 7, which has a surface gloss of not more than 65 %.

9. A biaxially stretched film according to claim 7, which has not less than 300 g of a sticking strength measured by piercing the film with a sticking needle with an end radius of 0,5 mm.

10. A biaxially stretched film according to claim 7, which has a 10-point average surface roughness (Rt), measured by an attached-type surface roughness tester, of not less than 10 µm.

11. Food packages comprising a film set forth in any of claims 7 to 10.

## Patentansprüche

1. Polyamidharz-Zusammensetzung für Folien umfassend ein Polyamidharz und ein darin gemischtes faserförmiges Material, dadurch gekennzeichnet, daß das Polyamidharz eine Mischung ist aus einem copolymeren Polyamid und zwei oder mehr Polyamiden, worin, bezogen auf alle Polyamide, der Gehalt der Polyamid-bildenden Einheiten, die Caprolactam umfassen, 10 bis 90 Mol-% beträgt, der Gehalt der Polyamid-bildenden Einheiten aus Adipinsäure und Hexamethylendiamin 0,5 bis 30 Mol-% beträgt, der Gehalt der Polyamid-bildenden Einheiten aus Terephthalsäure und Hexamethylendiamin 0,5 bis 50 Mol-% beträgt, und der Gehalt der Polyamid-bildenden Einheiten aus Isophthalsäure und Hexamethylendiamin 0,5 bis 30 Mol-% beträgt.

2. Polyamidharz-Zusammensetzung nach Anspruch 1, dadurch gekennzeichnet, daß das Polyamidharz eine Mischung ist aus einem Copolymer von ε-Caprolactam, Hexamethylendiaminund Adipinsäure, einem Copolymer aus ε-Caprolactam, Hexamethylendiamin und Terephthalsäure, und einem Copolymer aus Hexamethylendiamin, Isophthalsäure und Terephthalsäure.

3. Polyamidharz-Zusammensetzung nach einem der Ansprüche 1 und 2, dadurch gekennzeichnet, daß das faserige Material eine Glasfaser ist.

4. Polyamidharz-Zusammensetzung nach Anspruch 3, dadurch gekennzeichnet, daß der Durchmesser (D) der Glasfaser 3 bis 15 µm, die mittlere Länge (L) der Glasfaser 15 bis 100 µm, und das Verhältnis (L/D) der mittleren Länge zum Durchmesser der Glasfaser 2 bis 15 beträgt.

5. Polyamidharz-Zusammensetzung nach einem der Ansprüche 1 bis 4, dadurch gekennzeichnet, daß das faserförmige Material in einer Menge von 2 bis 10 Gew.-% zugemischt ist.

6. Polyamidharz-Zusammensetzung nach einem der Ansprüche 1 bis 5, dadurch gekennzeichnet, daß der Gehalt der Polyamid-bildenden Einheiten, die Caprolactam umfassen, 65 bis 87 Mol-% beträgt.

7. Biaxial gereckte Folie umfassend eine Polyamidharz-Zusammensetzung nach einem der Ansprüche 1 bis 6.

8. Biaxial gereckte Folie nach Anspruch 7, dadurch gekennzeichnet, daß sie einen Oberflächenglanz von nicht mehr als 65 % aufweist.

9. Biaxial gereckte Folie nach Anspruch 7, dadurch gekennzeichnet, daß sie eine Durchstechfestigkeit, gemessen durch Durchstechen der Folie mit einer Stechnadel mit einem Endradius von 0,5 mm, von nicht weniger als 300 g aufweist.

10. Biaxial gereckte Folie nach Anspruch 7, dadurch gekennzeichnet, daß sie eine mittlere 10-Punkt-Oberflächenrauhigkeit (Rt), gemessen mit einer Oberflächenrauhigkeitstestvorrichtung vom angelagerten Typ, von nicht weniger als 10 µm aufweist.

11. Nahrungsmittelverpackungen, die eine Folie nach einem der Ansprüche 7 bis 10 umfassen.

## Revendications

1. Composition de résine de polyamide pour film, comprenant une résine de polyamide et un matériau fibreux mélangé à celui-ci, caractérisée en ce que la résine de polyamide est un mélange composé d'un polyamide copolymère et d'au moins deux polyamides, dans laquelle, dans le total des polyamides, la teneur en motifs formant polyamide comprenant du caprolactame est de 10 à 90 % en moles, la teneur en motifs formant polyamide composés d'acide adipique et d'hexaméthylènediamine est de 0,5 à 30 % en moles, la teneur en motifs formant polyamide composés d'acide téréphtalique et d'hexaméthylènediamine est de 0,5 à 50 % en moles, et la teneur en motifs formant polyamide composés d'acide isophtalique et d'hexaméthylènediamine est de 0,5 à 30 % en moles.

2. Composition de résine de polyamide selon la revendication 1, dans laquelle la résine de polyamide est un mélange composé d'un copolymère de ε-caprolactame, d'hexaméthylènediamine et d'acide adipique, d'un copolymère de ε-caprolactame, d'hexaméthylènediamine et d'acide téréphtalique, et d'un copolymère d'hexaméthylènediamine, d'acide isophtalique et d'acide téréphtalique.

3. Composition de résine de polyamide selon l'une quelconque des revendications 1 et 2, dans laquelle le matériau fibreux est une fibre de verre.

4. Composition de résine de polyamide selon la revendication 3, dans laquelle le diamètre (D) de la fibre de verre est de 3 à 15 µm, la longueur moyenne (L) de la fibre de verre est de 15 à 100 µm, et le rapport (L/D) de la longueur moyenne au diamètre de la fibre de verre est de 2 à 15.

5. Composition de résine de polyamide selon l'une quelconque des revendications 1 à 4, dans laquelle le matériau fibreux est mélangé en une proportion de 2 à 10 % en poids.

6. Composition de résine de polyamide selon l'une quelconque des revendications 1 à 5, dans laquelle la teneur en motifs formant polyamide comprenant du caprolactame est de 65 à 87 % en moles.

7. Film étiré biaxialement comprenant une composition de résine de polyamide selon l'une quelconque des revendications 1 à 6.

8. Film étiré biaxialement selon la revendication 7, qui a un brillant de surface non supérieur à 65 %.

9. Film étiré biaxialement selon la revendication 7, dont la résistance à la perforation, mesurée par perçage du film avec une aiguille de perforation ayant un rayon de 0,5 mm à l'extrémité, n'est pas inférieure à 300 g.

10. Film étiré biaxialement selon la revendication 7, qui a une rugosité moyenne arithmétique en surface en 10 points (Rt), mesurée par un dispositif de mesure de rugosité de surface du type fixé, non inférieure à 10 µm.

11. Conditionnements alimentaires comprenant un film selon l'une quelconque des revendications 7 à 10.
